# EUROPEAN PATENT SPECIFICATION

(11) **EP 3 591 213 B1**
(45) Date of publication and mention of the grant of the patent: **11.02.2026**
(21) Application number: 17898798.8
(22) Date of filing: 27.12.2017
(51) Int. Cl.: F02M 55/02, B23P 6/04, F02M 61/16

(54) **METHOD FOR MANUFACTURING STEEL FUEL-PRESSURE-FEEDING PIPE**
VERFAHREN ZUR HERSTELLUNG EINES KRAFTSTOFFDRUCKZUFÜHRUNGSROHRS AUS STAHL
PROCÉDÉ DE FABRICATION DE TUYAU D'ALIMENTATION EN PRESSION DE CARBURANT EN ACIER

(30) Priority: 28.02.2017 JP 2017036159
(43) Date of publication of application: 08.01.2020
(73) Proprietor: Usui Co., Ltd., Sunto-gun Shizuoka 411-8610 (JP)
(72) Inventor: IKENOYA, Taketo, Shizuoka 411-8610 (JP)
(74) Representative: VKK Patentanwälte PartG mbB
(86) International application number: PCT/JP2017/046980
(87) International publication number: WO 2018/159091

(56) References cited:
- EP-A1- 2 811 294
- JP-A- 2003 034 877
- JP-A- H0 957 329
- JP-A- H0 957 329
- JP-A- H05 154 536
- JP-A- S4 937 858
- JP-A- S61 126 368
- JP-U- S5 576 460
- US-A1- 2013 098 496

## Description

### Technical Field

The present invention relates to a method of manufacturing a pipe for supplying fuel to an engine in a gasoline direct-injection engine system or diesel engine system, and for example, to a method of manufacturing a high-quality steel fuel-conveying pipe that is excellent in corrosion resistance by removing a fine crack, wrinkle flaw, or the like occurring on an inner surface in drawing process or the like, and performing an inner surface treatment.

### Background Art

In fuel-conveying pipes for use in the gasoline direct-injection engine system or diesel engine system, products acquired by subjecting a stainless-steel-based material to various plastic workings (such as pipe-end forming and bending) and binding (such as brazing) as specifications with various performances such as pressure resistance, airtightness, and corrosion resistance have been most adapted.

Furthermore, in recent years, a fuel-conveying pipe which adopts steel-based pipe such as low carbon steel that is inexpensive more than the stainless-steel-based pipe has been suggested in the gasoline direct-injection engine system (refer to PTL 1). The steel fuel-conveying pipe is subjected to an inner surface treatment and/or outer surface treatment for excellent resistance to corrosive fuel to achieve high resistance particularly to corrosive fuel. Examples are a steel pipe in which a Ni-plated layer is formed on the inner surface of the steel pipe and an anti-rust film layer composed of a Zn-plated layer or a Zn-based alloy-plated layer is further formed on the Ni-plated layer and a steel pipe in which a Zn-plated layer or a Zn-based alloy-plated layer is formed on the outer surface of the steel pipe. Document EP 2 811 294 A discloses an ultrasonic flaw detection method.

However, the above-described steel fuel-conveying pipes have problems as follows.

That is, for example, when a drawn pipe material is used for the steel fuel-conveying pipe, an initial flaw (such as a fine crack or wrinkle flaw) occurring at the time of drawing is present on the inner peripheral surface of the pipe. Also, in the case of a welded pipe, an initial flaw (such as a weld defect part) occurring due to poor weld or the like is present on the inner peripheral surface of the pipe. If the inner surface treatment (for example, Ni plating) is performed in a state in which any of these defects on the pipe's inner peripheral surface, in particular, a fine crack, wrinkle flaw, or weld defect part, is present, a problem arises in which the plating solution does not penetrate into the inside of that fine crack, wrinkle flaw, or weld defect part, the portion of the fine crack, wrinkle flaw, or weld defect part is completely not subjected to the surface treatment to become a defect and, in particular, resistance to corrosive fuel cannot be acquired, thereby forcing corrosion and rust to occur.

### Citation List

### Patent Literature

PTL 1: Japanese Patent Application Laid-Open No. 2012-26357

### Summary of Invention

### Technical Problem

The present invention was made in view of the problems of the conventional technology, and is to suggest a method of manufacturing a high-quality steel fuel-conveying pipe that does not have an initial flaw (such as a fine crack, wrinkle flaw, or weld defect part) occurring on the inner peripheral surface of the pipe and is highly resistant to corrosive fuel, in steel pipes for supplying fuel to an engine in a gasoline direct-injection engine system or diesel engine system.

### Solution to Problems

The method of manufacturing a steel fuel-conveying pipe according to the present invention relates to a method according to claim 1.

Also the process by mechanical cutting for use as the way of removing the initial flaw (such as a fine crack, wrinkle flaw, or weld defect part) on the inner peripheral surface of the pipe material is carried out by a gun drill processing machine for use in deep hole processing.

Furthermore, as a preferable mode, an ultrasonic flaw detection method may be preferably used as a means of detecting the initial flaw on the inner peripheral surface of the pipe material.

### Advantageous Effects of Invention

According to the method of manufacturing a steel fuel-conveying pipe of the present invention, the initial flaw (such as a fine crack, wrinkle flaw, or weld defect part) on the inner peripheral surface of a pipe material such as a drawn pipe, semi-seamless pipe, or welded pipe is detected or predicted, and the inner peripheral surface of the pipe material the detection value of which does not exceed a predefined threshold is removed by mechanical cutting, thereby achieving excellent effects of causing removal of the initial flaw to be completely performed, enhancing smoothness on the inner peripheral surface of the pipe, improving corrosion resistance of the surface treatment on the inner peripheral surface of the pipe, and acquiring a high-quality steel fuel-conveying pipe that is highly resistant to corrosive fuel.

Also, by using a gun drill processing machine for use in deep hole processing as means of removing the initial flaw (such as a fine crack, wrinkle flaw, or weld defect part) on the inner peripheral surface of the pipe material, with the favorable straight-ahead movement of the blade, cutting can be performed uniformly in the axial and circumferential directions of the pipe, thereby allowing the initial flaw to be completely removed.

### Brief Description of Drawings

Figure 1 is a block diagram depicting one example of a process of manufacturing a steel fuel-conveying pipe for implementing a method of the present invention.
Figure 2 is a schematic diagram depicting a gun drill processing machine for use in a removal step of initial flaw of the pipe material in the process of manufacturing the steel fuel-conveying pipe depicted in Figure 1.

### Description of Embodiments

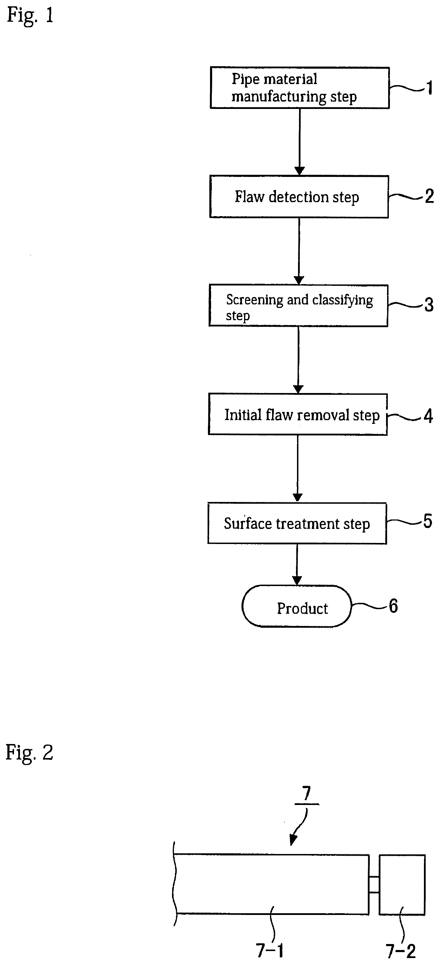

In the method of manufacturing a steel fuel-conveying pipe according to the present invention, as one example of the manufacturing process is depicted in Figure 1, firstly, a pipe material which is a base material of the pipe is manufactured, as a pipe to be processed, in a pipe material manufacturing step 1. The pipe material manufacturing step 1 corresponds to, for example, a drawing step and a welded pipe manufacturing step. The pipe material to be manufactured in the pipe material manufacturing step 1 is, for example, a steel pipe using a low-carbon steel or alloy steel such as carbon steel pipes for mechanical structural use including STKM, SCM, STK, and STS and having an outer diameter of 10 mm to 30 mm and an inner diameter of 5 mm to 20 mm.

Next, as acceptance inspection of the base material of pipe, flaw detection is performed on the inner peripheral surface of the pipe material by a flaw detector to detect an initial flaw (such as a fine crack, wrinkle flaw, or weld defect part) in a flaw detection step 2 of the pipe material. Subsequently, in a screening and classifying step 3 of the pipe material, the pipe material is screened and classified as a pipe material with a value detected in the flaw detection step exceeding a predefined threshold or a pipe material with the detected value not exceeding the threshold. As for the threshold of the initial flaw (such as a fine crack, wrinkle flaw, or weld defect part), its reference value is set at, for example, a depth of 150 µm. The pipe material exceeding this threshold is processed as a defective piece, and the pipe material not exceeding the threshold is fed to a next initial flaw removal step 4. In this regard, the threshold is determined, for example, based on the type, inner diameter, and material thickness of the pipe material; and the size of the fine crack, wrinkle flaw, weld defect part, or the like.

In the initial flaw removal step 4, the inner peripheral surface of the pipe material not exceeding the threshold is subjected of mechanical cutting with a magnitude equal to or larger than the threshold, thereby removing the initial flaw. As the method using mechanical cutting for use as a method of removing the initial flaw (such as a fine crack, wrinkle flaw, or weld defect part) on the inner peripheral surface of the pipe material not exceeding the threshold, a method using a gun drill processing machine 7 for use in deep hole processing depicted in Figure 2 is used. This gun drill processing machine 7 for use in deep hole processing is of a type of cutting with a cutting tool 7-2 attached to a main body 7-1 being pushed into a pipe material fixed to a jig (omitted in the drawing) while being rotated. The processing is a scheme using a tool focusing on hole straight-ahead movement, which is a so-called gun drill, and thus the gun drill processing machine 7 for use in deep hole processing is suitable as means of removing an initial flaw on the inner peripheral surface of the pipe material.

The pipe material not exceeding the threshold with the initial flaw on its inner peripheral surface removed by the gun drill processing machine 7 for use in deep hole processing in the initial flaw removal step 4 is subsequently subjected to a surface treatment such as Ni plating in a surface treatment step 5 on the inner surface of the pipe material. On that occasion, the surface treatment is performed along the inner surface of the pipe material. In the case of the pipe material with the initial flaw on its inner peripheral surface removed in the initial flaw removal step 4, the inner surface is free from a fine crack, wrinkle flaw, or weld defect part, and therefore a portion to which the plating solution is not applied is not present at all, and the entire inner surface is reliably subjected to the surface treatment. Therefore, a product with the inner peripheral surface of the pipe material subjected to the surface treatment such as Ni plating in the surface treatment step 5 retains sufficient anti-rust power with respect to corrosive fuel, and thus the occurrence of corrosion or rust is completely eliminated and it is clear that the product is excellent in corrosion resistance.

### [Examples 1 to 6]

In the pipe material manufacturing step 1, steel-made drawn pipe materials (samples Nos. 1 to 6) manufactured by a drawing apparatus and having an outer diameter of 15.6 mm and an inner diameter of 9.8 mm were each used as a base material of pipe. In the flaw detection step 2, flaw detection was performed on the inner peripheral surface of each of the drawn pipe materials by a flaw detector to detect an initial flaw (such as a fine crack, wrinkle flaw, or weld defect part). Then in the screening and classifying step 3 of the drawn pipe materials, the pipe materials were screened and classified as one having a value detected in the flaw detection step 2 exceeding a preset threshold (150 µm) and one having the detected value not exceeding the threshold. In the next initial flaw removal step 4, the inner peripheral surface of each drawn pipe material not exceeding the threshold was cut by the gun drill processing machine 7 for use in deep hole processing. The machining allowance at that time was 0.2 mm (each surface). Subsequently in the surface treatment step 5, electroless Ni plating was performed on the inner peripheral surface of each drawn pipe material with the inner peripheral surface being cut to form a Ni-P (electroless Ni) plated layer having a film thickness of 3 µm to 5 µm.

The results of a corrosion resistance test performed on the steel drawn pipe materials in the present examples in the following manner are depicted in Table 1.

### •Corrosion resistance test

The inside of each steel drawn pipe material with Ni plating on the entire inner surface of the pipe material was filled with corrosive fuel (containing 20% alcohol-mixed fuel (gasoline), organic acid of 500 ppm, moisture of 5%, and chlorine of 10 ppm), and a corrosion situation inside the pipe when left at a temperature of 100°C for 1000 hours was checked. A corrosion resistance evaluation was made by checking the presence or absence of red rust by a visual check and a stereomicroscope.

### [Conventional Examples 1 to 3]

Steel-made drawn pipe materials having an outer diameter of 15.6 mm and an inner diameter of 9.8 mm, which were equal to those of Embodiments 1 to 6, were used, and the inner peripheral surface of each of the drawn pipe materials was subjected to the same electroless Ni plating as that of Embodiments 1 to 6 without mechanical cutting of the inner peripheral surface of the pipe materials after drawing to form a Ni-P (electroless Ni) plated layer having a film thickness of 3 µm to 5 µm. The results of a corrosion resistance test performed in a method similar to that of Embodiments 1 to 6 are also depicted in Table 1.

From the results in Table 1, in any of the steel drawn pipe materials of the present invention in Embodiments 1 to 6 in which flaw detection was performed on the inner peripheral surface of each pipe material after drawing, the inner peripheral surface of the drawn pipe material not exceeding the preset threshold was removed by mechanical cutting, and then an electroless Ni plated layer was formed, no occurrence of red rust inside the pipe was observed and excellent corrosion resistance was recognized.

On the other hand, in any of Conventional Examples 1 to 3, occurrence of red rust was found on the inner peripheral surface of each drawn pipe material, and it was found out that corrosion resistance is inferior, compared with the steel drawn pipe material of the present invention.

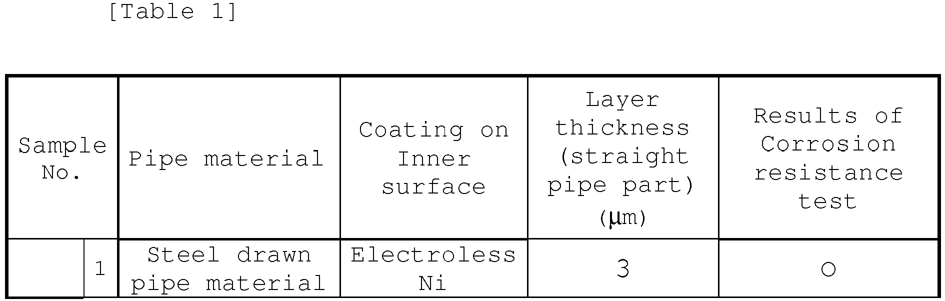

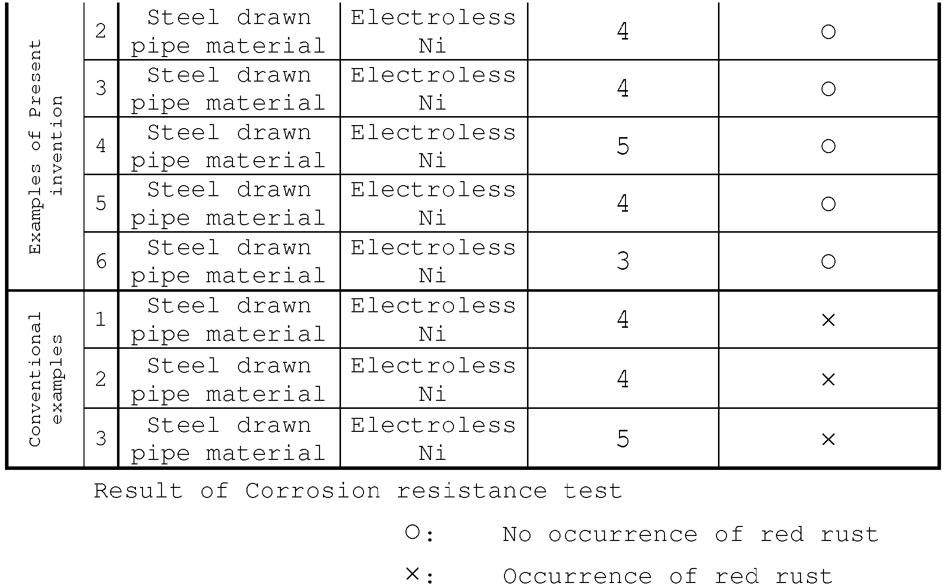

### [Examples 7 to 12]

In the pipe material manufacturing step 1, steel-made welded pipe materials (sample Nos. 7 to 12) manufactured by a welding pipe manufacturing apparatus and having an outer diameter of 15.9 mm and an inner diameter of 9.9 mm were used as base materials of pipe. As for the depth of a weld defect, a depth to be removed was investigated in advance by a statistical scheme, the machining allowance of the inner surface of each of the pipe materials was set based on that predicted maximum flaw depth, and the inner peripheral surface was cut by the gun drill processing machine 7 for use in deep hole processing for a cutting amount with a threshold (150 µm) of the preset machining allowance. The machining allowance of the inner peripheral surface at that time was 0.2 mm (each surface). Subsequently in the surface treatment step 5, electroless Ni plating was performed on the inner peripheral surface of each welded pipe material with the inner peripheral surface being cut to form a Ni-P (electroless Ni) plated layer having a film thickness of 3 µm to 5 µm.

The results of a corrosion resistance test performed on the steel welded pipe material in the present examples in the same manner as that of Embodiment 1 are depicted in Table 2.

### [Conventional Examples 4 to 6]

Steel-made welded pipe materials having an outer diameter of 15.9 mm and an inner diameter of 9.9 mm, which were equal to those of Embodiments 7 to 12, were used, and the inner peripheral surface of each welded pipe material was subjected to the same electroless Ni plating as that of Embodiments 7 to 12 without mechanical cutting of the inner peripheral surface of the pipe material after pipe manufacture to form an Ni-P (electroless Ni) plated layer having a film thickness of 3 µm to 5 µm. The results of a corrosion resistance test performed in a method similar to that of Embodiments 1 to 6 are also depicted in Table 2.

From the results in Table 2, also in the present embodiments, in any of the welded pipe materials of the present invention in Embodiments 7 to 12 in which the depth of a weld defect part after welded pipe manufacture was preset by a statistical scheme, the inner peripheral surface of each welded pipe material was removed by mechanical cutting by more than the preset threshold, and then an electroless Ni plated layer was formed, no occurrence of red rust inside the pipe material was observed and excellent corrosion resistance was recognized. On the other hand, in any of Conventional Examples 4 to 6, occurrence of red rust was found on the inner peripheral surface of the welded pipe material, and it was found out that corrosion resistance is inferior, compared with the steel welded pipe material of the present invention.

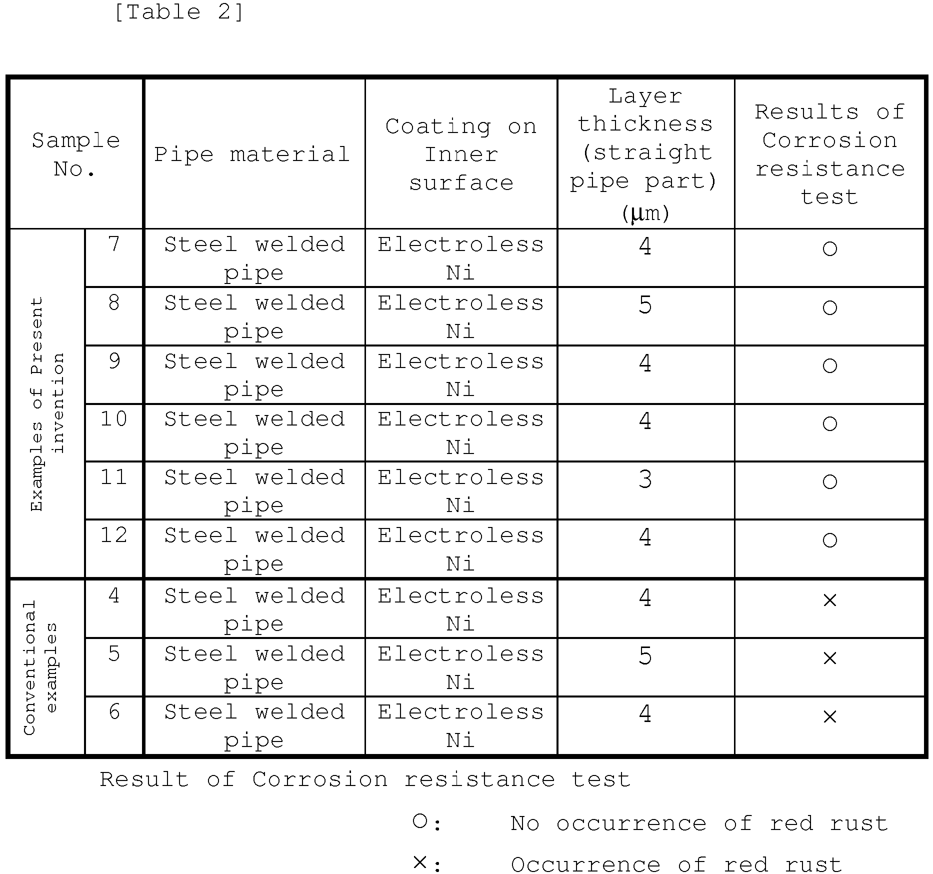

### Reference Signs List

- 1: pipe material manufacturing step
- 2: flaw detection step
- 3: screening and classifying step
- 4: initial flaw removal step
- 5: surface treatment step
- 6: product
- 7: gun drill processing machine
- 7-1: main body
- 7-2: cutting tool

## Claims

1. A method of manufacturing a steel fuel-conveying pipe having an anti-rust film layer on an inner peripheral surface of a steel pipe material namely low-carbon steel or alloy steel such as carbon steel including STKM, SCM, STK, and STS the pipe being manufactured by a drawing step and a welded pipe manufacturing step and having an outer diameter of 10 mm to 30 mm and an inner diameter of 5 mm to 20 mm, **characterized by** comprising:
screening and classifying the pipe material as one having an initial flaw exceeding a preset threshold of 150 µm on the inner peripheral surface of the pipe material or one having the initial flaw not exceeding the preset threshold on the inner peripheral surface of the pipe material,
removing the initial flaw on the inner peripheral surface of the pipe material having the initial flaw not exceeding the threshold by mechanical cutting using a gun drill processing machine for use in deep hole processing, with a magnitude equal to or larger than the preset threshold of 150 µm, and
subjecting the inner peripheral surface of the pipe material to a surface treatment in the form of electroless Ni plating to form a NiP plated layer having a film thickness between 3 µm and 5 µm.

## Patentansprüche

1. Verfahren zur Herstellung eines Stahlrohrs zum Transport von Treibstoffen mit einer Rostschutzschicht auf der Innenumfangsfläche eines Stahlrohrmaterials, nämlich kohlenstoffarmem Stahl oder legiertem Stahl wie Kohlenstoffstahl, einschließlich STKM, SCM, STK und STS, wobei das Rohr durch einen Ziehvorgang und einen Rohrschweißvorgang hergestellt wird und einen Außendurchmesser von 10 mm bis 30 mm und einen Innendurchmesser von 5 mm bis 20 mm aufweist, **gekennzeichnet durch**:
das Überprüfen und Klassifizieren des Rohrmaterials als solches mit einem Anfangsfehler, der einen vorgewählten Schwellenwert von 150 µm auf der Innenumfangsfläche des Rohrmaterials überschreitet, oder als solches mit einem Anfangsfehler, der den vorgewählten Schwellenwert auf der Innenumfangsfläche des Rohrmaterials nicht überschreitet,
Entfernen des Anfangsfehlers auf der Innenumfangsfläche des Rohrmaterials, dessen Anfangsfehler den Schwellenwert nicht überschreitet, durch mechanisches Schneiden unter Verwendung einer Tieflochbohrmaschine für die Tieflochbearbeitung mit einer Größe, die gleich oder größer als der voreingestellte Schwellenwert von 150 µm ist, und
Unterziehen der Innenumfangsfläche des Rohrmaterials einer Oberflächenbehandlung in Form einer stromlosen Ni-Beschichtung, um eine NiPbeschichtete Schicht mit einer Schichtdicke zwischen 3 µm und 5 µm zu bilden.

## Revendications

1. Procédé de fabrication d'un tuyau en acier destiné au transport de combustible, comportant une couche de film antirouille sur la surface périphérique interne d'un matériau de tuyau en acier, à savoir de l'acier à faible teneur en carbone ou de l'acier allié tel que l'acier au carbone, y compris les aciers STKM, SCM et STK et STS, le tuyau étant fabriqué par une étape d'étirage et une étape de fabrication de tuyau soudé et ayant un diamètre extérieur de 10 mm à 30 mm et un diamètre intérieur de 5 mm à 20 mm, **caractérisé en ce qu'**il comprend :
le criblage et le classement du matériau de tuyau comme ayant un défaut initial dépassant un seuil prédéfini de 150 µm sur la surface périphérique interne du matériau de tuyau ou comme ayant un défaut initial ne dépassant pas le seuil prédéfini sur la surface périphérique interne du matériau de tuyau,
l'élimination du défaut initial sur la surface périphérique interne du matériau de tuyau présentant un défaut initial ne dépassant pas le seuil par découpe mécanique à l'aide d'une machine d'usinage à forage profond, avec une ampleur égale ou supérieure au seuil prédéfini de 150 µm, et
soumettre la surface périphérique interne du matériau tubulaire à un traitement de surface sous la forme d'un placage de nickel chimique afin de former une couche plaquée de NiP ayant une épaisseur de film comprise entre 3 µm et 5 µm.
